# EUROPÄISCHE PATENTANMELDUNG

(11) **EP 4 671 575 A1**
(43) Veröffentlichungstag der Anmeldung: **31.12.2025**
(21) Anmeldenummer: 25156977.8
(22) Anmeldetag: 10.02.2025
(51) Int. Cl.: F16K 1/36, F16K 1/38, F16K 1/54, F16K 31/06, F16K 1/12

(54) **DURCHFLUSSREGELVENTIL UND VERFAHREN**

(30) Priorität: 25.06.2024 DE 102024117816
(71) Anmelder: SVM Schultz Verwaltungs-GmbH & Co. KG, 87700 Memmingen (DE)
(72) Erfinder: Wassermann, Ralph, 87752 Holzgünz (DE); Kächler, Martin, 87700 Memmingen (DE)
(74) Vertreter: Patentanwälte Olbricht, Buchhold, Keulertz Partnerschaft mbB

(57) **Zusammenfassung**

Vorgeschlagen wird ein Durchflussregelventil (2), welches von einer Längsachse (A) durchgriffen ist, umfassend einen Ventilkörper (4) mit einer Einlassöffnung (6) und einer Auslassöffnung (8) an gegenüberliegenden Seiten des Ventilkörpers (4) und einem Fluidkanal (10), der die Einlassöffnung (6) fluidisch mit der Auslassöffnung (8) verbindet, und einen Elektromagneten (100), der vom Fluidkanal (10) durchsetzt ist, wobei das Durchflussregelventil (2) einen Dichtkörper (12) umfasst, der zwischen einer den Fluidkanal (10) verschließender Schließstellung (S1) und einer den Fluidkanal (10) freigebenden Öffnungsstellung verstellbar ist.

## Beschreibung

Die Erfindung betrifft ein Durchflussregelventil gemäß Anspruch 1 und ein Verfahren gemäß Anspruch 12.

Aus der Praxis sind Durchflussregelventile bekannt, insbesondere elektromagnetisch betätigbare Durchflussregelventile. Die Durchflussregelventile weisen einen Kanal auf, durch welchen ein Fluid strömen kann. Allerdings sind die Kanäle im Ventil zumeist umgelenkt und/oder das Ventil aufwändig konstruiert. Ferner sind derartige Durchflussregelventile funktional begrenzt.

Aufgabe der Erfindung ist daher die Verbesserung des oben genannten Standes der Technik.

Erfindungsgemäße Merkmale sind in Anspruch 1 und 12 angegeben. Ausgestaltungen sind Gegenstand der Ansprüche 2 bis 11.

Erfindungsgemäß wird daher ein Durchflussregelventil vorgeschlagen, welches von einer Längsachse durchgriffen ist, umfassend einen Ventilkörper mit einer Einlassöffnung und einer Auslassöffnung an gegenüberliegenden Seiten des Ventilkörpers und einem Fluidkanal, der die Einlassöffnung fluidisch mit der Auslassöffnung verbindet, und einen Elektromagneten, der vom Fluidkanal durchsetzt ist, wobei das Durchflussregelventil einen Dichtkörper umfasst, der zwischen einer den Fluidkanal verschließender Schließstellung und einer den Fluidkanal freigebenden Öffnungsstellung verstellbar ist.

Die Öffnungen des Ventilkörpers sind an gegenüberliegenden Seiten oder stirnseitig des Ventilkörpers verortet. Das Durchflussregelventil ist daher ein "in-line"-Durchflussregelventil. Das Durchflussregelventil ist axial entlang der Längsachse durchströmbar, so dass nachteilige Umlenkungen des Fluidkanals vermieden sind. Der Fluidkanal ist umlenkungsfrei und/oder erstreckt sich entlang der Längsachse, vorzugsweise vollständig. Er ist daher strömungsoptimiert und verhindert unerwünschte Verwirbelungen im Fluid. Ein solches Durchflussregelventil ist kostengünstig herstellbar und benötigt kleinsten Bauraum, denn es kann optimal platzsparend in einem Rohrleistungssystem verbaut werden. Der Fluidkanal kann sich erstrecken von der Einlassöffnung zur Auslassöffnung, vorzugsweise durchgehend. Fluid kann den Fluidkanal von der Einlassöffnung zur Auslassöffnung durchströmen (Fluidrichtung). Dies dient der Bauweise als "in-line"-Durchflussregelventil. Die Einlassöffnung kann einen von Fluid durchströmbaren Querschnitt aufweisen.

Der Elektromagnet ist vom Fluidkanal durchsetzt, insbesondere dessen Spule, sodass das Fluid durch den Elektromagnet, insbesondere dessen Spule, strömen kann. Dies dient der Kühlung der Spule, denn es erfolgt eine optimale Abfuhr Ohm'scher Verlustwärme durch das Fluid im Fluidkanal. Die Durchströmung des Elektromagneten dient ferner einer vorteilhaften Anschlusslage und einer kompakten Bauweise.

Das Durchflussregelventil kann stromlos geschlossen sein. Der Elektromagnet kann eine Spuleneinheit mit Spulenträger und Spule umfassen, welche wahlweise bestrombar ist zur Erzeugung eines Magnetfelds zur Bewegung eines Ankers entlang der Längsachse. Der Elektromagnet kann eine Ankereinheit umfassen, umfassend den Anker und eine Ankerstange, welche mit dem Anker fest verbunden sein kann. Der Anker ist in einem Ankerraum beweglich. Der Anker kann einen Längsdurchgang aufweisen, durch den der Fluidkanal verlaufen kann. Der Längsdurchgang kann den Kanal außenumfangsseitig begrenzen, zumindest abschnittsweise. Die Ankerstange kann einen Längsdurchgang aufweisen, durch den der Fluidkanal verlaufen kann. Die Ankerstange kann den Kanal außenumfangsseitig begrenzen, vorzugsweise über die vollständige Länge des Längsdurchgangs. Dies dient der Vermeidung von Umlenkungen des Fluidkanals. Der Anker, die Ankerstange und der Dichtkörper können fest miteinander verbunden und gemeinsam verstellbar sein. Dies dient der kompakten Bauweise und kostengünstigen Herstellung, denn eine solche Baugruppe kann vorgefertigt werden. Der Elektromagnet kann einen Kern umfassen. Der Kern kann den Ankerraum stirnseitig begrenzen. Der Kern kann einen Längsdurchgang aufweisen, durch den der Fluidkanal verlaufen kann. Der Längsdurchgang kann den Kanal außenumfangsseitig begrenzen. Das Bestromen der Spule kann den Anker entlang der Längsachse verstellen und den Dichtkörper aus seiner Schließstellung in seine Öffnungsstellung verbringen. Die Rückstellung des Dichtkörpers in seine Schließstellung kann mittels Vorspannmittel erfolgen.

Der Dichtkörper kann mit dem Anker verbunden oder daran befestigt und/oder damit verstellbar sein. Durch elektromagnetische Verstellung des Ankers kann der Dichtkörper dann ebenfalls verstellt werden. Der Dichtkörper kann parallel entlang der Längsachse verstellbar sein zwischen seinen Stellungen. Der Dichtkörper kann im Längsdurchgang des Ankers und/oder der Ankerstange verortet sein. Dies dient der Vermeidung von Umlenkungen des Fluidkanals. Der Dichtkörper kann in Längsrichtung hinterschneidungsfrei sein. Dies dient der Vermeidung von Verwirbelungen und/oder der kostengünstigen Herstellung.

Das Durchflussregelventil kann einen Dichtsitz ausbilden, an dem der Dichtkörper in seiner Schließstellung dichtend anliegen kann. Der Dichtsitz kann an der Einlassöffnung ausgebildet sein, wobei dies einer kompakten Bauweise dient.

Gemäß einer Weiterbildung des Durchflussregelventils kann der Dichtkörper im Fluidkanal angeordnet sein, vorzugsweise vollständig. Dies dient einer kompakten Bauweise. Der Dichtkörper kann außenumfangsseitig von Fluid im Fluidkanal umspülbar sein, vorzugsweise in Längsrichtung. Dies dient der Vermeidung von Verwirbelungen.

Gemäß einer Weiterbildung des Durchflussregelventils kann der Dichtkörper aus Kunststoffmaterial oder Metall gefertigt sein. Das Kunststoffmaterial kann ein thermoplastisches oder duroplastisches Material sein. Es eignet sich aufgrund seiner guten Gleiteigenschaften zur Reduzierung von Reibungswiderstand beim Verstellen. Ferner hat es keinen Einfluss auf den Magnetkreis des Elektromagneten. Sofern der Dichtkörper eine Dichtfläche selbst ausbildet, dient Kunststoff aufgrund seiner Elastizität einer vorteilhaften Dichtigkeit in der Schließstellung. Das Metall kann Stahl oder Messing sein. Stahl hat den Vorteil eines geringen Temperaturausdehnungskoeffizienten und somit einen geringen temperaturabhängigen Drift der Durchflusskennlinie. Stahl ermöglicht präzise Herstelltoleranzen und geringe Exemplarstreuung ergeben. Auch der Verschleiß des Stahls am Dichtsitz ist gering. Messing bietet gute Gleiteigenschaften insb. in der Kombination mit Kunststoff als Gleitpartner. Denkbar ist, dass der Dichtkörper aus Stahl oder Messing gefertigt ist und dessen Gleitpartner, vorzugsweise der Ventilkörper, im Bereich der Kontaktierung mit dem Dichtkörper aus dem anderen von Stahl oder Messing gefertigt ist.

Denkbar ist, dass der Dichtkörper ein Spritzgussteil, ein Sinterteil oder ein additiv hergestelltes Teil ist. Spritzguss ist kostengünstig, insbesondere für den Fall, dass der Dichtkörper in Längsrichtung hinterschneidungsfrei ist. Ein Sinterteil ist beständig gegen diverse Fluide und ebenfalls temperaturbeständig. Ferner bietet es eine große Formgebungsfreiheit, denn Sintern erlaubt komplexe Geometrien und individuelle Formen, was die Gestaltung von Dichtkörpern flexibler macht. Ein additiv hergestelltes Teil, beispielsweise mittels 3D-Druck, kann ebenfalls eine komplexe Geometrie bei zugleich geringen Kosten realisieren.

Gemäß einer Weiterbildung des Durchflussregelventils kann der Dichtkörper an seiner Außenumfangsseite zumindest einen Längskanal ausbilden. Vorzugsweise bildet der Dichtkörper mehrere Längskanäle an seiner Außenumfangsseite aus, vorzugsweise gleichmäßig in Umfangsrichtung beabstandet. Der Längskanal/die Längskanäle kann/können einen Teil des Fluidkanals bilden. Der Längskanal/die Längskanäle kann/können parallel, vorzugsweise strikt parallel, entlang der Längsachse verlaufen. Dies vermeidet Verwirbelungen. Der Längskanal/die Längskanäle kann/können stirnseitig offen sein. Hierdurch kann der Umlenkungsfreiheit Rechnung getragen werden.

Denkbar ist, dass der Dichtkörper einen Zentraldorn und außenumfangsseitig am Zentraldorn angeordnete Längsrippen umfasst. Zwischen benachbarten Längsrippen kann ein Längskanal ausgebildet sein. Die Längsrippen sind mit Vorteil am Dichtkörper verortet, denn dort sind sie kostengünstig herstellbar. Jede Längsrippe ragt in Radialrichtung vom Zentraldorn ab und erstreckt sich parallel, vorzugsweise strikt parallel, entlang der Längsachse. Dies vermeidet Verwirbelungen. Der Zentraldorn kann sich entlang der Längsachse erstrecken.

Denkbar ist, dass der Dichtkörper einstückig ist, vorzugsweise stoffeinheitlich. Dadurch ist der Dichtkörper kostengünstig herstellbar. Ferner ist er dauerhaft, da Verbindungsstellen zwischen Abschnitten des Dichtkörpers vermieden sind. Der Zentraldorn kann mit den Längsrippen einstückig ausgebildet sein.

Denkbar ist, dass die Längsrippen anströmseitig jeweils eine in Längsrichtung zunehmende Radialhöhe aufweisen. Dieser Bereich kann als Anstiegsbereich bezeichnet werden. Dadurch strömt das Fluid nicht gegen eine senkrechte Wand an, wodurch Verwirbelungen vermieden sind.

Denkbar ist, dass die Längsrippen abströmseitig jeweils einen Montageanschlag aufweisen. Dadurch kann eine Einbautiefe des Dichtkörpers im Anker sicher festgelegt werden, wodurch ein Montageaufwand reduziert ist. Denkbar ist, dass der Anker innenumfangsseitig eine ringförmige Montagestufe aufweist, gegen welche die Montageanschläge anliegen können. Aus gründen geringkomplexer Geometrie können die Längsrippen abströmseitig jeweils eine senkrecht zur Längsachse verlaufende Stirnseite aufweisen, die den Montageanschlag ausbildet.

Denkbar ist, dass querschnittlich betrachtet die Seitenwände der Längsrippen mit der Längsachse fluchten. Dadurch können die Längsrippen im Umfangsrichtung am Zentraldorn schmaler sein als außenumfangsseitig. Dies ermöglicht zugleich einen großen Durchströmungsbereich (Rippen am Zentraldorn schmal) und eine große Führungs-/Befestigungsfläche (Rippen außenumfangsseitig breit).

Denkbar ist, dass der Dichtkörper in den Anker eingepresst ist. Dadurch kann eine kostengünstige und dauerhafte Befestigung erreicht werden. Die Pressverbindung kann vermittels der Befestigungsfläche erfolgen. Denkbar ist zusätzlich oder alternativ, dass der Dichtkörper mittels Sprengring und/oder Verbördelung und/oder Verkleben und/oder Verschweißen am Anker befestigt und/oder gesichert ist. Mit Vorteil kann ein Dichtkörper aus einem Kunststoffmaterial neben der Pressverbindung vermittels einer weiteren Befestigung/Sicherung am Anker befestigt sein. Dies kann ein Radialspiel vermeiden aufgrund unterschiedlicher Wärmeausdehnungskoeffizienten vom Kunststoff des Dichtkörpers und Metalls des Ankers. Ein Dichtkörper aus Metall kann mit Vorteil mittels ausschließlich einer Befestigung am Anker befestigt werden. Unterschiedliche Wärmeausdehnungskoeffizienten können vernachlässigt werden.

Gemäß einer Weiterbildung des Durchflussregelventils kann der Dichtkörper an seiner Außenumfangsseite eine Führungsfläche und eine, vorzugsweise davon verschiedene, Befestigungsfläche aufweisen. Die Führungsfläche und/oder Befestigungsfläche kann von den Längsrippen ausgebildet sein. Dies ermöglicht in Radialrichtung tiefe Längskanäle, die jeweils eine große Durchströmbarkeit zulassen. Die Führungsfläche kann an einem den Dichtkörper außenumfangsseitig umgebenden Bauteil führend anliegen, beispielsweise am Ventilkörper. Die führende Anlage vermeidet magnetischen Querzug und dient der optimaler Konzentrizität von Dichtkörper und Dichtsitz. Die Befestigungsfläche kann an einem den Dichtkörper außenumfangsseitig umgebenden Bauteil befestigt anliegen, beispielsweise am Anker. Die Innenumfangsfläche des Ankers und die Befestigungsfläche können unmittelbar aneinander anliegen.

Denkbar ist, dass die Führungsfläche stromaufwärts der Befestigungsfläche angeordnet ist. (Stromaufwärts bezüglich der Fluidrichtung). Die Führungsfläche und die Befestigungsfläche sind in Längsrichtung benachbart zueinander angeordnet. Dadurch kann der Dichtkörper vermittels der Befestigungsfläche im Anker befestigt sein und stirnseitig mit der Führungsfläche aus dem Anker herausstehen. Dies dient der kompakten Bauweise. Denkbar ist, dass der Dichtkörper eine Querebene durchragt, wobei zur einen Seite der Querebene die Führungsfläche aber nicht die Befestigungsfläche angeordnet ist, und zur anderen Seite der Querebene die Befestigungsfläche aber nicht die Führungsfläche angeordnet ist. Dadurch kann eine einfache geometrische Trennung der Flächen erfolgen, die zu einer geringen Komplexität führt.

Gemäß einer Weiterbildung des Durchflussregelventils kann der Dichtkörper zwei Abschnitte unterschiedlichen Außendurchmessers aufweisen, wobei die Führungsfläche am Abschnitt mit kleinerem Außendurchmesser verortet ist und die Befestigungsfläche am Abschnitt mit größerem Außendurchmesser verortet ist. Die beiden Abschnitte können von den Längsrippen ausgebildet werden. Die beiden Abschnitte können in Längsrichtung unmittelbar aneinander anschließen. Dies dient der Kompaktheit in Längsrichtung. Zwischen den beiden Abschnitten kann ein Durchmessersprung ausgebildet sein. Der Abschnitt mit größerem Außendurchmesser ermöglicht eine große Durchströmung in diesem Abschnitt bei gleichzeitiger Pressverbindung mit dem Anker.

Denkbar ist, dass die Radiallänge der Längsrippen im Bereich des 0,25-fachen bis 2,0-fachen Durchmessers des durchströmbaren Querschnitts der Einlassöffnung liegt, vorzugsweise das 1,0-fache beträgt. Die Radiallänge kann senkrecht zur Längsachse gemessen werden und/oder zwischen der Außenumfangsfläche des Zentraldorns und der Außenumfangsfläche der Längsrippe gemessen werden. Die Außenumfangsfläche der Längsrippe kann den größten Außendurchmesser des Dichtkörpers definieren.

Denkbar ist, dass die Radiallänge oder erste Radiallänge der Längsrippen im Abschnitt des Dichtkörpers mit kleinerem Außendurchmesser im Bereich des 0,25-fachen bis 2,0-fachen Durchmessers des durchströmbaren Querschnitts der Einlassöffnung liegt, vorzugsweise das 0,5-fache beträgt. Denkbar ist, dass die Radiallänge oder zweite Radiallänge der Längsrippen im Abschnitt des Dichtkörpers mit größerem Außendurchmesser im Bereich des 0,25-fachen bis 2,0-fachen Durchmessers des durchströmbaren Querschnitts der Einlassöffnung liegt, vorzugsweise das 0,75-fache beträgt.

Denkbar ist, dass der größte Außendurchmesser des Dichtkörpers im Bereich des 1,5-fachen bis 4,0-fachen des Durchmessers des durchströmbaren Querschnitts der Einlassöffnung liegt, vorzugsweise das 2,8-fache beträgt. Denkbar ist, dass der Außendurchmesser des Dichtkörpers im Abschnitt des Dichtkörpers mit kleinerem Außendurchmesser im Bereich des 1,5-fachen bis 3,5-fachen Durchmessers des durchströmbaren Querschnitts der Einlassöffnung liegt, vorzugsweise das 2,2-fache beträgt. Denkbar ist, dass der Außendurchmesser im Abschnitt des Dichtkörpers mit größerem Außendurchmesser im Bereich des 2,0-fachen bis 4,0-fachen Durchmessers des durchströmbaren Querschnitts der Einlassöffnung liegt, vorzugsweise das 2,8-fache beträgt.

Denkbar ist alternativ, dass die Längsrippen einen gleichbleibenden Außendurchmesser entlang der Längsachse aufweisen. Abgesehen von der zunehmenden Radialhöhe (Anstiegsbereich), sofern vorhanden. Dadurch kann eine Geometrievereinfachung erreicht werden. Gemäß einer Weiterbildung des Durchflussregelventils kann der Dichtkörper anströmseitig einen Staudruckreduzierungsabschnitt aufweisen und/oder einen konvex und/oder konkav und/oder linear geformten Kennlinieneinstellungsabschnitt aufweisen und/oder einen Dichtabschnitt aufweisen und/oder einen Abströmabschnitt aufweisen. Der Abschnitt/die Abschnitte kann/können vom Zentraldorn ausgebildet sein. Die Anströmseite ist der Einlassöffnung zugewandt, die Abströmseite ist der Auslassöffnung zugewandt. Die Abschnitte können konzentrisch zueinander und/oder in Fluidrichtung nacheinander angeordnet sein, vorzugsweise in der angegebenen Reihenfolge. Zwei Abschnitte können vorzugsweise unmittelbar in Fluidrichtung nacheinander angeordnet sein.

Der Staudruckreduzierungsabschnitt kann eine Spitze und davon ausgehend einen in Fluidrichtung zunehmenden Außendurchmesser aufweisen. Am Staudruckreduzierungsabschnitt kann sich der Staupunkt des Fluids ausbilden. Der Staudruckreduzierungsabschnitt kann beispielsweise kegelartig sein. Der Staudruckreduzierungsabschnitt bricht den Staudruck des Fluids, sodass sich vorteilhafte Strömungseigenschaften ergeben.

Längsschnittlich betrachtet kann die Außenumfangsfläche des Staudruckreduzierungsabschnitts mit der Längsachse einen Winkel oder ersten Winkel im Bereich von 20° bis 30°, vorzugsweise von 25°, einschließen.

Die Länge des Staudruckreduzierungsabschnitts (oder erste Länge des Dichtkörpers) kann im Bereich des 0,4-fachen bis 0,6-fachen Durchmessers des durchströmbaren Querschnitts der Einlassöffnung liegen, vorzugsweise das 0,5-fache betragen. Die Länge kann parallel zur Längsachse gemessen werden.

Der größte Durchmesser des Staudruckreduzierungsabschnitts (oder erste Durchmesser des Dichtkörpers) kann im Bereich des 0,4-fachen bis 0,6-fachen Durchmesser des durchströmbaren Querschnitts der Einlassöffnung liegen, vorzugsweise das 0,5-fache betragen.

Der Staudruckreduzierungsabschnitt kann mit dem unmittelbar stromabwärts anschließenden Abschnitt des Dichtkörpers oder Zentraldorns einen Winkel oder zweiten Winkel einschließen. Der Kennlinieneinstellungsabschnitt kann mit dem unmittelbar stromaufwärts anschließenden Abschnitt des Dichtkörpers oder Zentraldorns einen Winkel oder zweiten Winkel einschließen. Der Winkel oder zweite Winkel kann vom Staudruckreduzierungsabschnitt und Kennlinieneinstellungsabschnitt eingeschlossen werden. Der Winkel oder zweite Winkel kann im Bereich von 140° bis 179° liegen, vorzugsweise 150° betragen. Diese geometrischen Verhältnisse dienen der verwirbelungsfreien Fluidströmung.

Der konvexe, konkave und lineare Verlauf des Kennlinieneinstellungsabschnitts ist im Längsschnitt betrachtet. Der Kennlinieneinstellungsabschnitt kann Teilbereiche mit unterschiedlich geformten Verläufen (konvex, konkav, linear) aufweisen. Die Teilbereiche können in Fluidrichtung benachbart zueinander angeordnet sein. Der konvexe und/oder konkave Kennlinieneinstellungsabschnitt kann aus mehreren einander unmittelbar benachbarten linearen Verläufen bestehen, vorzugsweise aus drei linearen Verläufen. Die linearen Verläufe können gegenüber der Längsachse unterschiedlich geneigt sein. Zwischen diesen benachbarten linearen Verläufen können längsschnittlich betrachtet Ausrundungen ausgebildet sein. Der Radius/die Radien der Ausrundungen kann/können R0,2 sein und/oder im Bereich des 0,05-fachen bis 2,5-fachen Durchmessers des durchströmbaren Querschnitts der Einlassöffnung liegen. Dies dient der Verminderung eines Strömungsabrisses.

Der Kennlinieneinstellungsabschnitt kann ringförmig sein und dient der konstruktiven Einstellung der Kennlinienform und Hub-Durchflusskennlinie. Ein konvex geformter Kennlinieneinstellungsabschnitt wölbt sich aus dem Dichtkörper heraus, während ein konkav geformter Kennlinieneinstellungsabschnitt eine Einwölbung am Dichtkörper darstellt. Mittels Form des Kennlinieneinstellungsabschnitts kann die durchströmbare Querschnittsfläche in Abhängigkeit des Verstellwegs des Dichtkörpers eingestellt werden. Eine progressive Kennlinienform (Kennlinie Fluid-Massenstrom über elektrischem Regelstrom für den Elektromagneten) kann mittels eines konvex geformten Kennlinieneinstellungsabschnitt erreicht werden. Hingegen kann eine degressive Kennlinienform (Kennlinie Fluid-Massenstrom über elektrischem Regelstrom für den Elektromagneten) mittels eines konkav geformten Kennlinieneinstellungsabschnitt erreicht werden. Eine lineare Kennlinienform (Kennlinie Fluid-Massenstrom über elektrischem Regelstrom für den Elektromagnete) kann sich mittels linear geformtem Kennlinieneinstellungsabschnitt ergeben. Mit Vorteil kann nun die Kennlinienform und/oder der Kennlinienstartpunkt durch eine entsprechend geometrische Ausgestaltung des Dichtkörpers beeinflusst/eingestellt werden. Die Kennlinie kann degressive, lineare und/oder progressive Abschnitte aufweisen.

Längsschnittlich betrachtet kann die Außenumfangsfläche des Kennlinieneinstellungsabschnitts mit der Längsachse einen Winkel oder dritten Winkel im Bereich von 125° bis 165°, vorzugsweise von 145°, einschließen. Zusätzlich oder alternativ kann längsschnittlich betrachtet die Außenumfangsfläche des Kennlinieneinstellungsabschnitts mit der Längsachse einen Winkel oder vierten Winkel im Bereich von 1° bis 20°, vorzugsweise von 5°, einschließen. Gerade mittels diesen Winkels kann konstruktiv Einfluss auf die Kennliniensteigung genommen werden. Je kleiner dieser Winkel ist, desto weniger ändert sich die Kennlinie entlang des Dichtkörperhubs. Die Länge des Kennlinieneinstellungsabschnitts (oder zweite Länge des Dichtkörpers) kann im Bereich des 0,4-fachen bis 0,8-fachen Durchmessers des durchströmbaren Querschnitts der Einlassöffnung liegen, vorzugsweise das 0,5-fache betragen. Die Länge kann parallel zur Längsachse gemessen werden.

Der größte Durchmesser des Kennlinieneinstellungsabschnitts (oder zweite Durchmesser des Dichtkörpers) kann im Bereich des 0,8-fachen bis 0,95-fachen Durchmesser des durchströmbaren Querschnitts der Einlassöffnung liegen, vorzugsweise das 0,9-fache betragen.

Der Kennlinieneinstellungsabschnitts kann mit dem unmittelbar stromabwärts anschließenden Abschnitt des Dichtkörpers oder Zentraldorns einen Winkel oder fünften Winkel einschließen. Der Dichtabschnitt kann mit dem unmittelbar stromaufwärts anschließenden Abschnitt des Dichtkörpers oder Zentraldorns einen Winkel oder fünften Winkel einschließen. Der Winkel oder fünfte Winkel kann vom Kennlinieneinstellungsabschnitts und Dichtabschnitt eingeschlossen werden. Der Winkel oder fünfte Winkel kann im Bereich von 140° bis 179° liegen, vorzugsweise 155° betragen. Diese geometrischen Verhältnisse dienen der verwirbelungsfreien Fluidströmung.

Der Dichtabschnitt liegt in Schließstellung dichtend am Dichtsitz an. Der Dichtabschnitt kann ringförmig sein und/oder einen in Fluidrichtung zunehmenden Außendurchmesser aufweisen. Dadurch können Maßtoleranzen und Geometrieveränderung im Betrieb ausgeglichen und ein dichtes Anliegen am Dichtsitz realisiert werden. Der Dichtabschnitt kann beispielsweise konisch sein.

Längsschnittlich betrachtet kann die Außenumfangsfläche des Dichtabschnitts mit der Längsachse einen Winkel oder sechsten Winkel im Bereich von 15° bis 35°, vorzugsweise von 25°, einschließen. Dies führt zu einer sicheren Dichtung bei gleichzeitiger Verhinderung des Verklemmens aufgrund eines zu spitzen Winkels und bei gleichzeitiger verwirbelungsfreier Strömungsermöglichung.

Die Länge des Dichtabschnitts (oder dritte Länge des Dichtkörpers) kann im Bereich des 0,10-fachen bis 0,4-fachen Durchmessers des durchströmbaren Querschnitts der Einlassöffnung liegen, vorzugsweise das 0,25-fache betragen. Die Länge kann parallel zur Längsachse gemessen werden.

Der größte Durchmesser des Dichtabschnitts (oder dritte Durchmesser des Dichtkörpers) kann im Bereich des 1,05-fachen bis 1,5-fachen Durchmesser des durchströmbaren Querschnitts der Einlassöffnung liegen, vorzugsweise das 1,25-fache betragen.

Der Dichtabschnitt kann mit dem unmittelbar stromabwärts anschließenden Abschnitt des Dichtkörpers oder Zentraldorns einen Winkel oder siebenten Winkel einschließen. Der Abströmabschnitt kann mit dem unmittelbar stromaufwärts anschließenden Abschnitt des Dichtkörpers oder Zentraldorns einen Winkel oder siebenten Winkel einschließen. Der Winkel oder siebente Winkel kann vom Dichtabschnitt und Abströmabschnitt eingeschlossen werden. Der Winkel oder siebente Winkel kann im Bereich von 140° bis 179° liegen, vorzugsweise 155° betragen. Diese geometrischen Verhältnisse dienen der verwirbelungsfreien Fluidströmung.

Der Abströmabschnitt kann sich in Fluidrichtung an den Dichtabschnitt anschließen und/oder einen in Fluidrichtung abnehmenden Außendurchmesser aufweisen. Er führt zu einem möglichst geringen Druckverlust im Fluid und vermeidet unerwünschte Verwirbelungen. Denkbar ist, dass der Abströmabschnitt zweiteilig ausgebildet ist und einen stromaufwärts angeordneten Zylinderabschnitt und einen stromabwärts angeordneten Außendurchmesserreduzierungsabschnitt aufweist. Die Abschnitte können unmittelbar aneinander anschließen. Der Außendurchmesser kann sich in Fluidrichtung verjüngen. Mit Vorteil enden die Längsrippen am Zylinderabschnitt, wobei dies einer kompakten Bauweise bei zugleich größtmöglicher Führungsfläche dient. Längsschnittlich betrachtet kann die Außenumfangsfläche des Zylinderabschnitts parallel zur Längsachse verlaufen.

Längsschnittlich betrachtet kann die Außenumfangsfläche des Zylinderabschnitts mit der Außenumfangsfläche des Außendurchmesserreduzierungsabschnitts einen Winkel oder achten Winkel im Bereich von 2° bis 15°, vorzugsweise von 7°, einschließen. Dies führt zur Vermeidung von Verwirbelungen. Längsschnittlich betrachtet kann die Außenumfangsfläche des Außendurchmesserreduzierungsabschnitts mit der Längsachse einen Winkel oder neunten Winkel im Bereich von 2° bis 15°, vorzugsweise von 6°, einschließen. Dies führt zur Vermeidung von Verwirbelungen.

Die Länge des Abströmabschnitts (oder vierte Länge des Dichtkörpers) kann im Bereich des 1,0-fachen bis 2,0-fachen Durchmessers des durchströmbaren Querschnitts der Einlassöffnung liegen, vorzugsweise das 1,5-fache betragen. Die Länge kann parallel zur Längsachse gemessen werden. Die Länge des Zylinderabschnitts kann im Bereich des 0,2-fachen bis 0,8-fachen Durchmessers des durchströmbaren Querschnitts der Einlassöffnung liegen, vorzugsweise das 0,5-fache betragen. Die Länge kann parallel zur Längsachse gemessen werden. Die Länge des Außendurchmesserreduzierungsabschnitts kann im Bereich des 0,5-fachen bis 3,0-fachen Durchmessers des durchströmbaren Querschnitts der Einlassöffnung liegen, vorzugsweise das 1,0-fache betragen. Die Länge kann parallel zur Längsachse gemessen werden. Die Längen von Zylinderabschnitt und Außendurchmesserreduzierungsabschnitt können die Länge des Abströmabschnitts ergeben.

Der größte Durchmesser des Abströmabschnitts (oder vierte Durchmesser des Dichtkörpers) kann im Bereich des 1,0-fachen bis 1,5-fachen Durchmesser des durchströmbaren Querschnitts der Einlassöffnung liegen, vorzugsweise das 1,2-fache betragen. Der größte Durchmesser des Abströmabschnitts kann identisch dem größten Durchmesser des Dichtabschnitts sein.

Der Abströmabschnitt kann mit dem unmittelbar stromabwärts anschließenden Abschnitt des Dichtkörpers oder Zentraldorns einen Winkel oder zehnten Winkel einschließen. Der Winkel oder zehnte Winkel kann vom Abströmabschnitt einem Zentralbasisabschnitt des Zentraldorns eingeschlossen werden. Der Winkel oder zehnte Winkel kann im Bereich von 2° bis 15° liegen, vorzugsweise 7° betragen. Diese geometrischen Verhältnisse dienen der verwirbelungsfreien Fluidströmung.

Die vorteilhafte Kombination aller vier Abschnitte dient der optimalen Verlustminimierung. Die Staupunktströmung kann aufgrund des Staudruckreduzierungsabschnitts, des Kennlinieneinstellungsabschnitts und des Dichtabschnitts nahezu verlustfrei erfolgen. An die Staupunktströmung kann sich die Nachlaufströmung anschließen, die aufgrund des Abströmabschnitts nun nicht mehr mit Verlusten verbunden ist, da auftretende Wirbelbildung und eine Nachlaufdelle vermieden sind.

Denkbar ist, dass der Zentraldorn einen Zentralbasisabschnitt aufweist. Vorzugsweise verläuft die Außenumfangsfläche des Zentralbasisabschnitts längsschnittlich betrachtet parallel zur Längsachse, vorzugsweise durchgehend. Der Zentralbasisabschnitt kann stromabwärts und/oder benachbart, vorzugsweise unmittelbar benachbart, zum Abströmabschnitt angeordnet sein. Der Zentralbasisabschnitt kann stromaufwärts und/oder benachbart, vorzugsweise unmittelbar benachbart, zur Düsennadel angeordnet sein. Der Zentralbasisabschnitt kann der Stabilität des Dichtkörpers dienen.

Die Länge des Zentralbasisabschnitts (oder fünfte Länge des Dichtkörpers) kann im Bereich des 3-fachen bis 10-fachen Durchmessers des durchströmbaren Querschnitts der Einlassöffnung liegen, vorzugsweise das 6,0-fache betragen. Die Länge kann parallel zur Längsachse gemessen werden.

Der größte Durchmesser des Zentralbasisabschnitts (oder fünfte Durchmesser des Dichtkörpers) kann im Bereich des 0,75-fachen bis 1,5-fachen Durchmesser des durchströmbaren Querschnitts der Einlassöffnung liegen, vorzugsweise das 1,0-fache betragen.

Der Zentralbasisabschnitt kann mit dem unmittelbar stromabwärts anschließenden Abschnitt oder Teil des Dichtkörpers oder Zentraldorns einen Winkel oder elften Winkel einschließen. Eine Düsennadel kann mit dem unmittelbar stromaufwärts anschließenden Abschnitt des Dichtkörpers oder Zentraldorns einen Winkel oder elften Winkel einschließen. Der Winkel oder elfte Winkel kann vom Zentralbasisabschnitt und der Düsennadel eingeschlossen werden. Der Winkel oder elfte Winkel kann im Bereich von 140° bis 179° liegen, vorzugsweise 165° betragen. Diese geometrischen Verhältnisse dienen der verwirbelungsfreien Fluidströmung.

Gemäß einer Weiterbildung des Durchflussregelventils kann der Dichtkörper abströmseitig eine Düsennadel aufweisen. Die Düsennadel kann vom Zentraldorn ausgebildet sein. Die Düsennadel kann einen in Fluidrichtung abnehmenden Außendurchmesser aufweisen. Sie dient der Vermeidung einer Unterdruckzone direkt hinter dem Dichtkörper, welche den Massenstrom reduziert und eine störende Kraft auf die Regelfunktion (Magnetkraft ggü. Strömungskraft) ausübt. Die Düsennadel reduziert den Druckverlust im Strömungsquerschnitt, weil die Stromlinien hinter dem Dichtkörper stetig zusammengeführt werden. Ferner werden sich vom Dichtkörper ablösende Wirbel vermieden.

Längsschnittlich betrachtet kann die Außenumfangsfläche der Düsennadel mit der Längsachse einen Winkel oder zwölften Winkel im Bereich von 5° bis 25°, vorzugsweise von 15°, einschließen. Dies führt zu einem verwirbelungsfreien Zusammenführen des Fluids stromabwärts des Dichtkörpers.

Die Länge der Düsennadel (oder sechste Länge des Dichtkörpers) kann im Bereich des 0,6-fachen bis 2,6-fachen Durchmessers des durchströmbaren Querschnitts der Einlassöffnung liegen, vorzugsweise das 1,5-fache betragen. Die Länge kann parallel zur Längsachse gemessen werden. Denkbar ist, dass die Düsennadel gegenüber den Längsrippen entlang der Längsachse um eine Länge oder siebente Länge des Dichtkörpers hervorsteht, die im Bereich des 0,75-fachen bis 1,75-fachen Durchmessers des durchströmbaren Querschnitts der Einlassöffnung liegt, vorzugsweise das 1,15-fache beträgt.

Der größte Durchmesser der Düsennadel (oder sechste Durchmesser des Dichtkörpers kann im Bereich des 0,75-fachen bis 1,5-fachen Durchmesser des durchströmbaren Querschnitts der Einlassöffnung liegen, vorzugsweise das 1,0-fache betragen. Der größte Durchmesser der Düsennadel kann identisch dem größten Durchmesser des Zentralbasisabschnitts sein.

Die Länge der Längsrippen (oder achte Länge des Dichtkörpers) kann im Bereich des 4-fachen bis 10-fachen Durchmessers des durchströmbaren Querschnitts der Einlassöffnung liegen, vorzugsweise das 7,5-fache betragen. Die Länge kann parallel zur Längsachse gemessen werden. Die Länge oder eine neunte Länge des Dichtkörpers oder des Zentraldorns kann im Bereich des 5-fachen bis 15-fachen Durchmessers des durchströmbaren Querschnitts der Einlassöffnung liegen, vorzugsweise das 10,0-fache betragen. Die Länge kann parallel zur Längsachse gemessen werden.

Gemäß einer Weiterbildung des Durchflussregelventils kann es einen Lagerring umfassen, gegen den sich ein Vorspannmittel abstützt. Der Lagerring kann bezüglich des Ventilkörpers und/oder des Kerns ortsfest sein, vorzugsweise mittels Abstützung des Vorspannmittels und/oder Anliegen gegen eine Einstellhülse. Das Abstützen und/oder das Anliegen sichert die axiale Position des Lagerrings. Der Lagerring kann eine Abstützung für das Vorspannmittel definieren. Mittels seiner wählbaren Einbautiefe kann die Vorspannung des Vorspannmittels und somit auch ein Nullpunkt der Durchfluss-Strom-Kennlinie eingestellt werden. Der Lagerring kann im und/oder am Längsdurchgang des Kerns befestigt sein. Der Lagerring kann in und/oder an einer Lagerhülse des Elektromagneten befestigt sein. Der Lagerring kann einen Längsdurchgang aufweisen, durch den der Fluidkanal verlaufen kann, wobei dies der Vermeidung von Umlenkungen dient. Der Lagerring kann ein separates Teil zum Kern sein. Hierdurch kann er bei Montage relativ zum Kern bewegt werden, um die Einbautiefe einzustellen.

Denkbar ist, dass der Lagerring die Ankerstange lagert. Die Ankerstange kann den Längsdurchgang des Lagerrings durchgreifen und somit an ihrer Außenumfangsseitge im Lagerring entlang einer Verstellung in Längsrichtung geführt sein. Dies dient einer kompakten Bauweise, insbesondere hinsichtlich einer Funktionsintegrierung in den Lagerring (Abstützung für Vorspannmittel, Einstellmitteöls für Kennlinie, Lagerung der Ankerstange).

Denkbar ist, dass das Ventil eine Einstellhülse umfasst, die am Lagerring anliegt. Die Einstellhülse kann im und/oder am Längsdurchgang des Kerns befestigt sein. Die Einstellhülse kann einen Längsdurchgang aufweisen, durch den der Fluidkanal verlaufen kann, wobei dies der Vermeidung von Umlenkungen dient. Der Längsdurchgang kann den Fluidkanal außenumfangsseitig begrenzen. Die Einstellhülse dient den axialen Positionierung des Lagerrings bei Montage. In die Einstellhülse kann die Ankerstange einragen, zumindest in der Öffnungsstellung. Hierdurch ist eine kompakte Bauweise erreichbar.

Denkbar ist, dass das Vorspannmittel eine Schraubenfeder ist, die sich einends am Lagerring abstützt. Anderenends kann sich das Vorspannmittel am Anker oder der Ankerstange abstützen. Das Vorspannmittel kann den Dichtkörper in seine Schließstellung vorspannen. Mittels der wählbaren Einbautiefe des Lagerrings kann die Vorspannung des Vorspannmittels und somit auch der (stromlose) Öffnungspunkt des Dichtkörpers eingestellt werden.

Gemäß einer Weiterbildung des Durchflussregelventils kann der Elektromagnet die Ankerstange umfassen, die als Hohlteil ausgebildet ist und/oder eine Wandstärke im Bereich von 0,2 mm bis 0,6 mm aufweist, vorzugsweise von 0,4 mm. Die Ankerstange kann an beiden Stirnseiten offen sein. Hierdurch ist sie vollständig in Längsrichtung durchströmbar, wodurch Umlenkungen des Fluidkanals vermieden sind. Die Wandstärke dient der Maximierung des durchströmbaren Querschnitts und der Minimierung von Strömungsverlusten.

Denkbar ist, dass die Ankerstange zumindest eine Öffnung zum Ankerraum aufweist. Durch diese zumindest eine Öffnung kann der Fluidkanal unmittelbar mit dem Ankerraum fluidisch verbunden werden. Diese Verbindung dient dem fluidischen Ausgleich bei Verstellung des Ankers.

Denkbar ist, dass die Ankerstange innenumfangsseitig des Vorspannmittels angeordnet ist. Dies dient einer kompakten Bauweise.

Gemäß einer Weiterbildung des Durchflussregelventils kann der Anker des Elektromagneten innenumfangsseitig eine Fixiernut ausbilden, in welche die Ankerstange eingreift, vorzugsweise greift ein axialer Rand der Ankerstange unter Ausbildung eines sich verjüngenden Innendurchmessers in die Fixiernut ein. Der Innendurchmesser des axialen Rands der Ankerstange kann sich entlang der Fluidrichtung verjüngen. Der axiale Rand der Ankerstange kann ein eingeformter Rand sein. Durch plastische Verformung des axialen Rands der Ankerstange in die Fixiernut ergeben sich mehrere Vorteile. Die Ankerstange ist sicher und dauerhaft am Anker befestigt. Der sich verjüngende Innendurchmesser verringert Verwirbelungen und vermeidet Durchmessersprünge, die zu Verwirbelungen führen. Die Fixiernut kann im Längsdurchgang des Ankers angeordnet sein. Die Verortung dient der kompakten Bauweise, denn die Befestigung kann innerhalb des Ankers erfolgen. Die Fixiernut kann eine Ringnut sein. Die Ringform dient der fehlerfreien Montage, da die Ausrichtung von Fixiernut zu Ankerstange unbeachtlich ist. Die Fixiernut kann nach innenradial offen sein, wobei dies der einfachen Montage und Einformung dient.

Denkbar ist, dass die Ankerstange in den Anker eingepresst ist, vorzugsweise in dessen Längsdurchgang. Dadurch kann eine kostengünstige und dauerhafte Befestigung erreicht werden.

Erfindungsgemäß wird ferner ein Verfahren zur Montage einer Ankerstange vorgeschlagen, umfassend die folgenden Schritte:
- Bereitstellen eines Ankers mit einem Längsdurchgang und einer innenumfangsseitigen Fixiernut,
- Bereitstellen einer Ankerstange, die als Hohlteil ausgebildet ist,
- Einführen der Ankerstange in den Längsdurchgang von einer ersten Seite des Ankers,
- Einführen eines Verformungswerkzeugs in den Längsdurchgang von einer zweiten Seite des Ankers,
- Einformen der Ankerstange in die Fixiernut mittels des Verformungswerkzeugs.

Die bereits oben bezüglich des Durchflussregelventils beschriebenen Vorteile ergeben sich analog auch für das Verfahren, worauf hiermit verwiesen wird. Die Ankerstange kann die bereits oben beschriebene Ankerstange sein. Gleiches kann für den Anker gelten. Das Verfahren ermöglicht eine einfache und kostengünstige Befestigung der Ankerstange als Hohlteil im Anker. Die beiden Seiten des Ankers können die beiden Stirnseiten des Ankers sein. Während also die Ankerstange von der einen Seite in den Anker eingeführt wird, wird das Verformungswerkzeug von der anderen Seite in den Anker eingeführt. Durch das Einformen kann der sich verjüngende Innendurchmesser ausgebildet werden.

Sollten Bauteile mehrfach offenbart sein, sollen Ausgestaltungen und Vorteile, die nur für eines der Bauteile beschrieben sind, gleichsam auch für die anderen entsprechenden Bauteile als in optionaler Weise offenbart gelten.

Die beschriebenen Vorteile ergeben sich insbesondere in den genannten Bereichsgrenzen, jedoch können die Vorteile auch jenseits einer oder beider konkreten Bereichsgrenzen vorliegen, wenn auch nur in abgeschwächter Ausprägung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

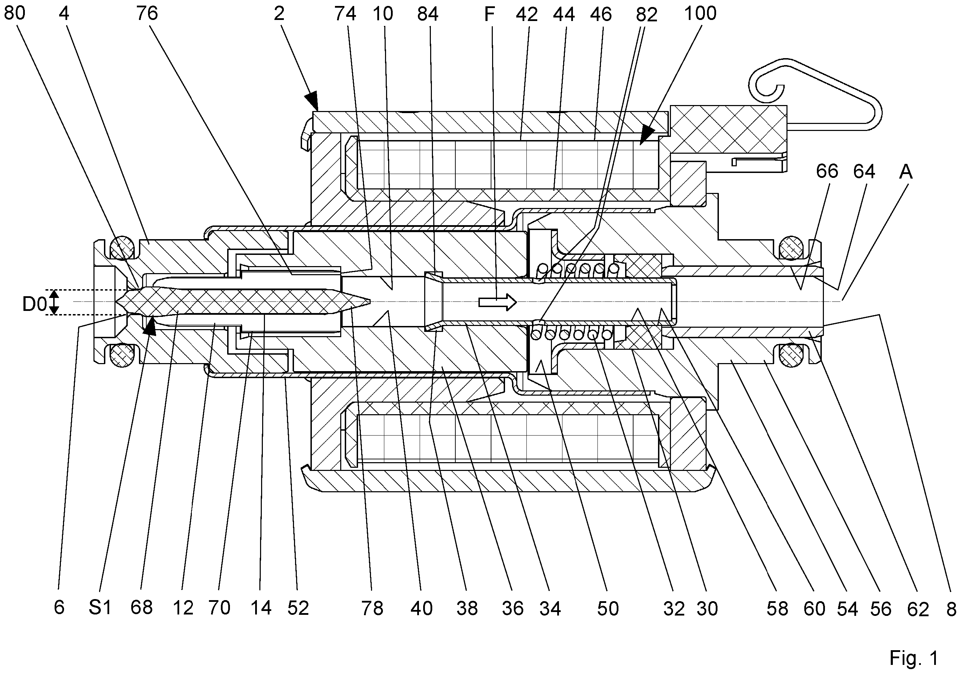

- Fig. 1: einen Längsschnitt durch ein Durchflussregelventil,
- Fig. 2a: eine Perspektivansicht auf einen Dichtkörper,
- Fig. 2b: einen Längsschnitt durch den Dichtkörper aus Fig. 2a,
- Fig. 2c: eine Detailansicht aus Fig. 2b,
- Fig. 2d: eine weitere Detailansicht aus Fig. 2b und
- Fig. 2e: eine Fronansicht des Dichtkörpers.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw.

gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Figuren zeigen eine Ausgestaltung eines Durchflussregelventils 2 und Details davon. Das Durchflussregelventil 2 ist von einer Längsachse A durchgriffen und umfasst einen Ventilkörper 4. Der Ventilkörper 4 weist an seinen gegenüberliegenden Stirnseiten eine Einlassöffnung 6 und eine Auslassöffnung 8 auf. Die Einlassöffnung 6 umfasst einen von Fluid durchströmbaren Querschnitt D0. Diese beiden Öffnungen 6, 8 sind mittels eines Fluidkanals 10 verbunden. Fluid kann entlang einer Fluidrichtung F durch den Fluidkanal 10 strömen. Der Fluidkanal 10 ist mittels Verstellung eines Dichtkörpers 12 zu öffnen und verschließbar. Dazu ist der Dichtkörper 12 zwischen einer den Fluidkanal 10 verschließenden Schließstellung S1 und einer den Fluidkanal 10 freigebenden Öffnungsstellung verstellbar. Das Durchflussregelventil 2 bildet einen Dichtsitz 80 aus, an dem der Dichtkörper 12 in seiner Schließstellung S1 dichtend anliegen kann.

Das Durchflussregelventil 2 umfasst einen Elektromagneten 100. Der Elektromagnet 100 weist eine Spuleneinheit 42 mit Spulenträger 44 und Spule 46 auf. Die Spule 46 ist wahlweise bestrombar zur Erzeugung eines Magnetfelds zur Bewegung eines Ankers 36 entlang der Längsachse A. Der Elektromagnet 100 weist ferner eine Ankereinheit 48 auf, umfassenden den Anker 36 und eine Ankerstange 34, welche mit dem Anker 36 fest verbunden ist. Der Anker 36 ist in einem Ankerraum 50 beweglich, der von einer Lagerhülse 52 begrenzt ist. Der Elektromagnet 100 weist zudem eine Kerneinheit 54 mit Kern 56 auf, wobei der Kern 56 den Ankerraum 50 stirnseitig begrenzt. Ein Lagerring 30 ist im Kern 56 befestigt, wobei der Lagerring 30 ein separates Teil bezüglich des Kerns 56 ist. Eine Einstellhülse 62 ist im Kern 56 befestigt, die am Lagerring 30 anliegt. Der Elektromagnet 100 ist vom Fluidkanal 10 durchsetzt.

Der Anker 36, die Ankerstange 34 und der Dichtkörper 12 sind fest miteinander verbunden und gemeinsam verstellbar durch Bestromen der Spule 46. Die Rückstellung erfolgt mittels eines Vorspannmittels 32. Die Verstellung erfolgt parallel entlang der Längsachse A.

Der Fluidkanal 10 verläuft zwischen der Einlassöffnung 6 und der Auslassöffnung 8 durch Längsdurchgänge verschiedener Bauteile. Der Anker 36 weist einen Längsdurchgang 40 auf, durch den der Fluidkanal 10 verläuft, wobei der Längsdurchgang 40 den Fluidkanal 10 außenumfangsseitig abschnittsweise begrenzt. Die Ankerstange 34 weist einen Längsdurchgang 58 auf, durch den der Fluidkanal 10 verläuft, wobei die Ankerstange 34 den Fluidkanal 10 außenumfangsseitig begrenzt, und zwar über die vollständige Länge des Längsdurchgangs 58. Der Lagerring 30 weist einen Längsdurchgang 60 auf, durch den der Fluidkanal 10 verläuft. Die Einstellhülse 62 weist einen Längsdurchgang 64 auf, durch den der Fluidkanal 10 verläuft, wobei der Längsdurchgang 64 den Fluidkanal 10 außenumfangsseitig begrenzt. Der Kern 56 weist einen Längsdurchgang 66 auf, durch den der Fluidkanal 10 verläuft.

Es ist daher ersichtlich, dass das Durchflussregelventil 2 axial entlang der Längsachse A durchströmbar ist, so dass nachteilige Umlenkungen des Fluidkanals 10 vermieden sind. Der Fluidkanal 10 ist umlenkungsfrei und erstreckt sich vollständig entlang der Längsachse A.

Gegen den Lagerring 30 stützt sich das Vorspannmittel 32 ab. Der Lagerring 30 ist bezüglich des Ventilkörpers 4 und des Kerns 56 ortsfest und mittels Pressverbindung axial am Kern 56 gesichert. Der Lagerring 30 ist im und am Längsdurchgang 66 des Kerns 56 befestigt. Der Lagerring 30 lagert die Ankerstange 34. Das Vorspannmittel 32 ist vorliegend als eine Schraubenfeder dargestellt, die sich einends am Lagerring 30 abstützt und anderenends am Anker 36 abstützt. Das Vorspannmittel 32 spannt den Dichtkörper 12 in seine Schließstellung S1 vor. Die Einstellhülse 62 ist im und am Längsdurchgang 66 des Kerns 56 befestigt.

Die Ankerstange 34 ist ein Hohlteil und weist eine Wandstärke im Bereich von 0,2 mm bis 0,4 mm auf. Sie ist an ihren beiden Stirnseiten offen und vollständig in Längsrichtung durchströmbar. Die Ankerstange 34 weist zwei Öffnungen 82 zum Ankerraum 50 auf. Durch diese Öffnungen 82 ist der Fluidkanal 10 unmittelbar mit dem Ankerraum 50 fluidisch verbunden. Die Ankerstange 34 ist innenumfangsseitig des Vorspannmittels 32 angeordnet. Die Ankerstange 34 weist anströmseitig einen axialen Rand 84 auf, der unter Ausbildung eines sich entlang der Fluidrichtung F verjüngenden Innendurchmessers in eine Fixiernut 38 plastisch eingeformt ist. Die Fixiernut 38, die als Ringnut ausgebildet ist, ist nach innenradial offen und im Längsdurchgang 40 des Ankers 36 ausgebildet.

Der Dichtkörper 12 ist einstückig und stoffeinheitlich gebildet aus einem Zentraldorn 68, der sich entlang der Längsachse A erstreckt, und außenumfangsseitig am Zentraldorn 68 angeordneten Längsrippen 70. Der Dichtkörper 12 weist abströmseitig eine Düsennadel 78 auf, die vom Zentraldorn 68 ausgebildet ist. Die Düsennadel 78 weist einen in Fluidrichtung F abnehmenden Außendurchmesser auf. Der Dichtkörper 12 ist in Längsrichtung hinterschneidungsfrei.

Zwischen benachbarten Längsrippen 70 ist jeweils ein Längskanal 14 ausgebildet. Jede Längsrippe 70 ragt in Radialrichtung vom Zentraldorn 68 ab und erstreckt sich strikt parallel entlang der Längsachse A. Die Längsrippen 70 und Längskanäle 14 sind gleichmäßig über den Umfang des Zentraldorns 68 verteilt. Die Längskanäle 14 bilden einen Teil des Fluidkanals 10 und sind zu beiden Seiten stirnseitig offen. Jede Längsrippe 70 weist anströmseitig eine in Längsrichtung zunehmende Radialhöhe auf, wobei dieser Bereich ein Anstiegsbereich 72 ist. Jede Längsrippe 70 weist abströmseitig einen Montageanschlag 74 auf, der gegen eine ringförmige Montagestufe 76 des Ankers 36 anliegt. Die Längsrippen 70 weisen abströmseitig jeweils eine senkrecht zur Längsachse A verlaufende Stirnseite auf, die den Montageanschlag 74 ausbildet.

Der Dichtkörper 12 weist an seiner Außenumfangsseite eine Führungsfläche 16 und eine davon verschiedene Befestigungsfläche 18 auf. Die Führungsfläche 16 und die Befestigungsfläche 18 sind von den Längsrippen 70 ausgebildet. Der Dichtkörper 12 weist zwei Abschnitte unterschiedlichen Außendurchmessers auf, wobei die Führungsfläche 16 am Abschnitt mit kleinerem Außendurchmesser verortet ist und die Befestigungsfläche 18 am Abschnitt mit größerem Außendurchmesser verortet ist. Die beiden Abschnitte sind von den Längsrippen 70 ausgebildet und schließen in Längsrichtung unter Ausbildung eines Durchmessersprungs 84 unmittelbar aneinander an. Der Durchmessersprung 84 liegt in einer gedachten Querebene, wobei zur einen Seite der Querebene die Führungsfläche 16 aber nicht die Befestigungsfläche 18 angeordnet ist und zur anderen Seite der Querebene die Befestigungsfläche 18 aber nicht die Führungsfläche 16 angeordnet ist.

Die Längsrippen 70 haben jeweils eine Radiallänge R, gemessen zwischen Außenumfangsfläche des Zentraldorns 68 und der Außenumfangsfläche der jeweiligen Längsrippe 70. Jede Längsrippe 70 weist im Abschnitt des Dichtkörpers 12 mit kleinerem Außendurchmesser eine erste Radiallänge R1 und im Abschnitt des Dichtkörpers 12 mit größerem Außendurchmesser eine zweite Radiallänge R2 auf.

Die Führungsfläche 16 liegt am Ventilkörper 4 führend an. Über die Befestigungsfläche 18 ist der Dichtkörper 12 im Anker 36 befestigt, wobei die Innenumfangsfläche des Ankers 36 und die Befestigungsfläche 18 unmittelbar aneinander anliegen und eine Pressverbindung ausbilden. Der Dichtkörper 12 ist im Längsdurchgang 40 des Ankers 36 verortet und vollständig im Fluidkanal 10 angeordnet. Der Dichtkörper 12 ist daher außenumfangsseitig von Fluid im Fluidkanal 10 in Längsrichtung umspülbar.

Die Führungsfläche 16 ist stromaufwärts (bezüglich der Fluidrichtung F) der Befestigungsfläche 18 angeordnet. Der Dichtkörper 12 steht stirnseitig mit der Führungsfläche 16 aus dem Anker 36 heraus.

Der Dichtkörper 12 weist eine Anströmseite 20 und eine Abströmseite 21 auf. Die Anströmseite 20 ist der Einlassöffnung 6 zugewandt, die Abströmseite 21 ist der Auslassöffnung 8 zugewandt. Anströmseitig weist der Dichtkörper 12 vier Abschnitte auf, die konzentrisch zueinander und in Fluidrichtung F nacheinander angeordnet sind. Die Abschnitte sind vom Zentraldorn 68 ausgebildet.

Der Dichtkörper 12 weist einen Staudruckreduzierungsabschnitt 22 auf, welcher eine Spitze und davon ausgehend einen in Fluidrichtung F zunehmenden Außendurchmesser aufweist. Der Staudruckreduzierungsabschnitt 22 ist vorliegend kegelartig ausgebildet. Die Außenumfangsfläche des Staudruckreduzierungsabschnitts 22 schließt mit der Längsachse A einen ersten Winkel W1 ein. Der Staudruckreduzierungsabschnitt 22 weist eine erste Länge L1 und einen größten Durchmesser D1 auf.

In Fluidrichtung F nachfolgend weist der Dichtkörper 12 einen Kennlinieneinstellungsabschnitt 24 auf, der ringförmig ist. Vorliegend ist der Kennlinieneinstellungsabschnitt konvex geformt und wölbt sich aus dem Dichtkörper 12 heraus. Vorliegend besteht der Kennlinieneinstellungsabschnitt 24 aus drei einander unmittelbar benachbarten linearen Verläufen. Zwischen diesen benachbarten linearen Verläufen sind längsschnittlich betrachtet Ausrundungen ausgebildet sein. Die linearen Verläufe sind gegenüber der Längsachse unterschiedlich geneigt.

Ein zweiter Winkel W2 wird vom Staudruckreduzierungsabschnitt 22 und Kennlinieneinstellungsabschnitt 24 eingeschlossen. Die Außenumfangsfläche des Kennlinieneinstellungsabschnitts 24 schließt mit der Längsachse A einen dritten Winkel W3 ein. Stromabwärts dazu schließt die Außenumfangsfläche des Kennlinieneinstellungsabschnitts 24 mit der Längsachse A einen vierten Winkel W4 ein. Der Kennlinieneinstellungsabschnitt 24 weist eine zweite Länge L2 und einen größten Durchmesser D2 auf.

In Fluidrichtung F nachfolgend weist der Dichtkörper 12 einen konischen Dichtabschnitt 26 auf, der ringförmig ist und einen in Fluidrichtung F zunehmenden Außendurchmesser aufweist. Der Dichtabschnitt 26 liegt in Schließstellung S1 am Dichtsitz 80 an.

Ein fünfter Winkel W5 wird vom Kennlinieneinstellungsabschnitt 24 und Dichtabschnitt 26 eingeschlossen. Die Außenumfangsfläche des Dichtabschnitts 26 schließt mit der Längsachse A einen sechsten Winkel W6 ein. Der Dichtabschnitt 26 weist eine dritte Länge L3 und einen größten Durchmesser D3 auf.

In Fluidrichtung F nachfolgend weist der Dichtkörper 12 einen Abströmabschnitt 28 auf, der ringförmig ist und streckenweise einen in Fluidrichtung F abnehmenden Außendurchmesser aufweist. Der Abströmabschnitt 28 ist zweiteilig ausgebildet und weist einen stromaufwärts angeordneten Zylinderabschnitt 28.1 und einen stromabwärts angeordneten Außendurchmesserreduzierungsabschnitt 28.2 aufweist. Die Längsrippen 70 enden stromaufwärts am Zylinderabschnitt 28.1. Längsschnittlich betrachtet verläuft die Außenumfangsfläche des Zylinderabschnitts 28.1 parallel zur Längsachse A. Die Außenumfangsfläche des Zylinderabschnitts 28.1 schließt mit der Außenumfangsfläche des Außendurchmesserreduzierungsabschnitts 28.2 einen achten Winkel W8 ein. Die Außenumfangsfläche des Außendurchmesserreduzierungsabschnitts 28.2 schließt mit der Längsachse A einen neunten Winkel W9 ein. Ein siebenter Winkel W7 wird vom Dichtabschnitt 26 und Abströmabschnitt 28 eingeschlossen. Der Abströmabschnitt 28 weist eine vierte Länge L4 auf, wobei auch der Zylinderabschnitt 28.1 eine Länge L4.1 und der Außendurchmesserreduzierungsabschnitt 28.2 eine Länge L4.2 aufweist. Der Abströmabschnitt 28 weist einen größten Durchmesser D4 auf, der identisch dem größten Durchmesser D3 ist.

Der Zentraldorn 68 weist einen Zentralbasisabschnitt 84 auf, dessen Außenumfangsfläche längsschnittlich betrachtet durchgehend parallel zur Längsachse A verläuft. Der Zentralbasisabschnitt 84 ist unmittelbar benachbart zwischen Abströmabschnitt 28 und Düsennadel 78 angeordnet. Der Zentralbasisabschnitt 84 weist eine fünfte Länge L5 und einen größten Durchmesser D5 auf.

Ein zehnter Winkel W10 wird vom Abströmabschnitt 28 und Zentralbasisabschnitt 84 eingeschlossen. Ein elfter Winkel W11 wird vom Zentralbasisabschnitt 84 und der Düsennadel 78 eingeschlossen. Die Außenumfangsfläche der Düsennadel 78 schließt mit der Längsachse A einen zwölften Winkel W12 ein. Der Düsennadel 78 weist eine sechste Länge L6 und einen größten Durchmesser D6 auf, der identisch dem größten Durchmesser D5 ist. Gegenüber den Längsrippen 70 steht die Düsennadel 78 entlang der Längsachse A um eine siebente Länge L7 hervor. Die Längsrippen 70 weisen eine achte Länge L8 auf. Der Dichtkörper 12 / Zentraldorn 78 weist eine neunte Länge L9 auf.

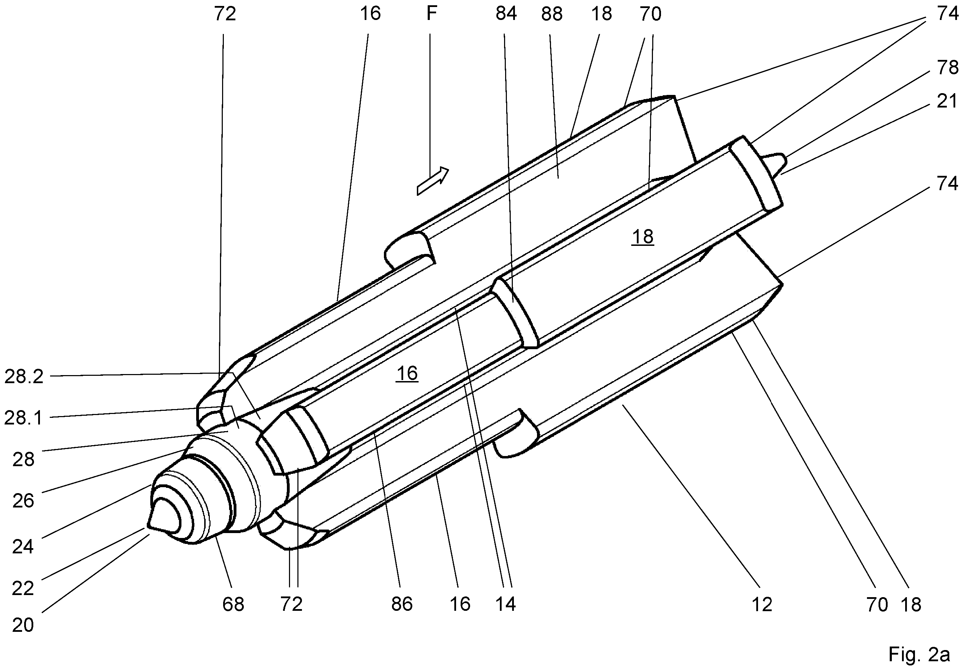

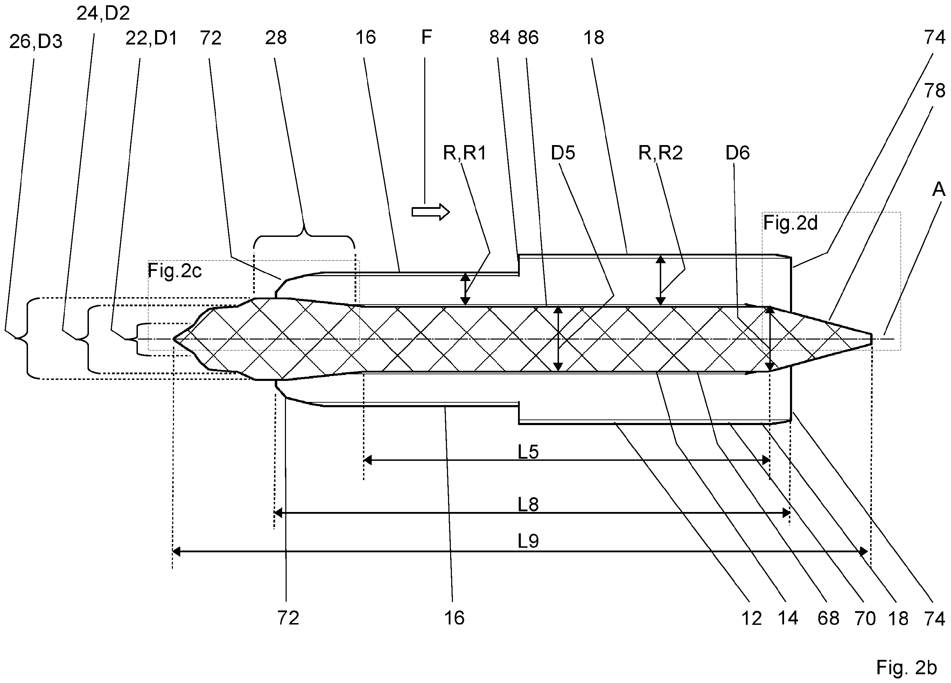

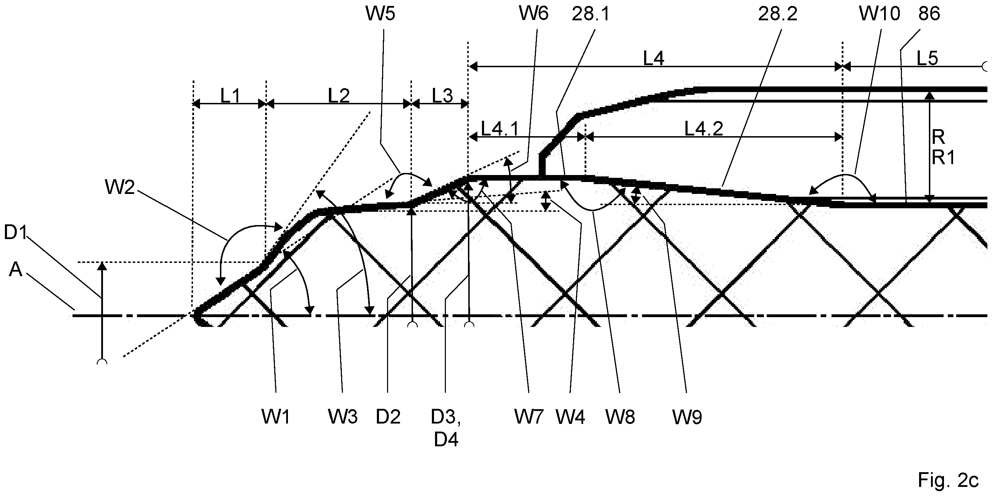

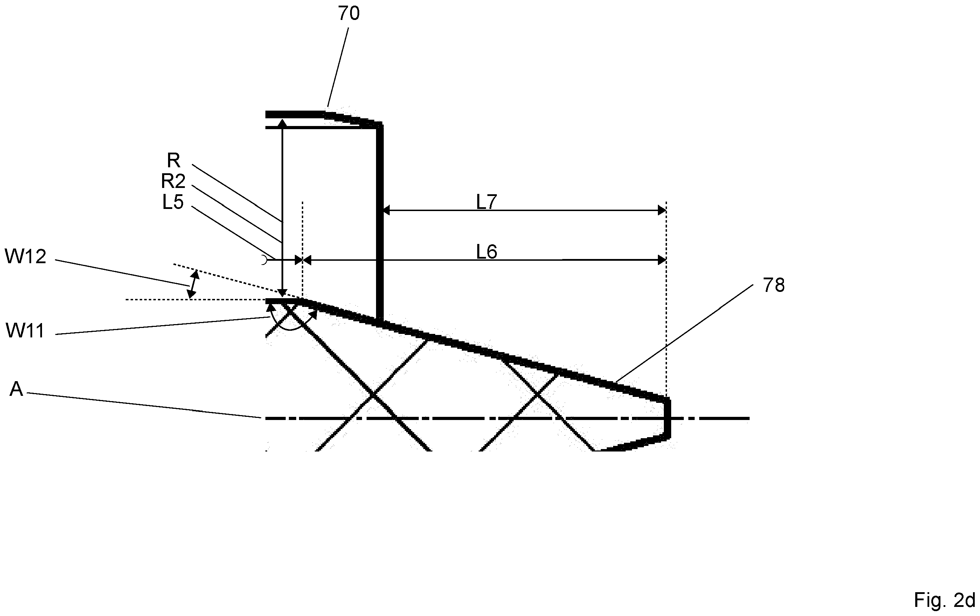

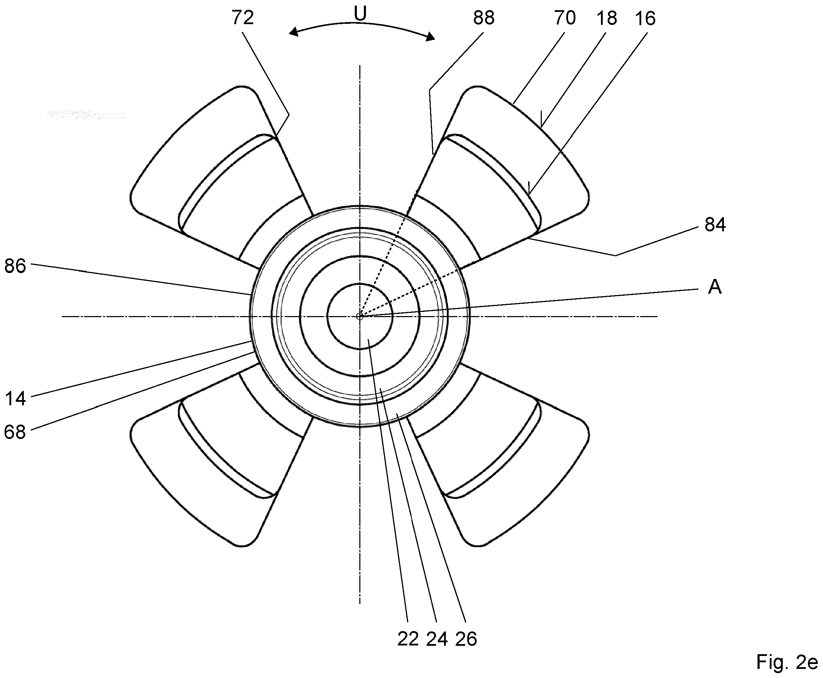

Die Seitenwände 88 der Längsrippen 70 fluchten mit der Längsachse A, insbesondere ersichtlich in Fig. 2e. In Umfangsrichtung U sind die Längsrippen 70 äquidistant verteilt.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Durchflussregelventil | 82 | Öffnung |
| 4 | Ventilkörper | 84 | Durchmessersprung |
| 6 | Einlassöffnung | 86 | Zentralbasisabschnitt |
| 8 | Auslassöffnung | 88 | Seitenwand |
| 10 | Fluidkanal | 100 | Elektromagnet |
| 12 | Dichtkörper | | |
| 14 | Längskanal | A | Längsachse |
| 16 | Führungsfläche | D0 | durchströmbarer Querschnitt |
| 18 | Befestigungsfläche | D1 | Durchmesser |
| 20 | Anströmseite | D2 | Durchmesser |
| 21 | Abströmseite | D3 | Durchmesser |
| 22 | Staudruckreduzierungsabschnitt | D4 | Durchmesser |
| 24 | Kennlinieneinstellungsabschnitt | D5 | Durchmesser |
| 26 | Dichtabschnitt | D6 | Durchmesser |
| 28 | Abströmabschnitt | F | Fluidrichtung |
| 28.1 | Zylinderabschnitt | L1 | erste Länge |
| 28.2 | Außendurchmesserreduzierungsabschnitt | L2 | zweite Länge |
| 30 | Lagerring | L3 | dritte Länge |
| 32 | Vorspannmittel | L4 | vierte Länge |
| 34 | Ankerstange | L4.1 | Länge |
| 36 | Anker | L4.2 | Länge |
| 38 | Fixiernut | L5 | fünfte Länge |
| 40 | Längsdurchgang | L6 | sechste Länge |
| 42 | Spuleneinheit | L7 | Siebente Länge |
| 44 | Spulenträger | L8 | achte Länge |
| 46 | Spule | L9 | neunte Länge |
| 48 | Ankereinheit | R | Radiallänge |
| 50 | Ankerraum | R1 | erste Radiallänge |
| 52 | Lagerhülse | R2 | zweite Radiallänge |
| 54 | Kerneinheit | S1 | Schließstellung |
| 56 | Kern | W1 | erster Winkel |
| 58 | Längsdurchgang | W2 | zweiter Winkel |
| 60 | Längsdurchgang | W3 | dritter Winkel |
| 62 | Einstellhülse | W4 | vierter Winkel |
| 64 | Längsdurchgang | W5 | fünfter Winkel |
| 66 | Längsdurchgang | W6 | sechster Winkel |
| 68 | Zentraldorn | W7 | siebenter Winkel |
| 70 | Längsrippe | W8 | achter Winkel |
| 72 | Anstiegsbereich | W9 | neunter Winkel |
| 74 | Montageanschlag | W10 | zehnter Winkel |
| 76 | Montagestufe | W11 | elfter Winkel |
| 78 | Düsennadel | W12 | zwölfter Winkel |
| 80 | Dichtsitz | | |

## Patentansprüche

1. Durchflussregelventil (2), welches von einer Längsachse (A) durchgriffen ist, umfassend
- einen Ventilkörper (4) mit
- einer Einlassöffnung (6) und einer Auslassöffnung (8) an gegenüberliegenden Seiten des Ventilkörpers (4) und
- einem Fluidkanal (10), der die Einlassöffnung (6) fluidisch mit der Auslassöffnung (8) verbindet, und
- einen Elektromagneten (100), der vom Fluidkanal (10) durchsetzt ist,
- wobei das Durchflussregelventil (2) einen Dichtkörper (12) umfasst, der zwischen einer den Fluidkanal (10) verschließender Schließstellung (S1) und einer den Fluidkanal (10) freigebenden Öffnungsstellung verstellbar ist.

2. Durchflussregelventil (2) nach Anspruch 1, **dadurch gekennzeichnet, dass** der Dichtkörper (12) im Fluidkanal (10) angeordnet ist, vorzugsweise vollständig.

3. Durchflussregelventil (2) nach einem der voranstehenden Ansprüche, **dadurch gekennzeichnet, dass** der Dichtkörper (12) aus Kunststoffmaterial oder Metall gefertigt ist.

4. Durchflussregelventil (2) nach einem der voranstehenden Ansprüche, **dadurch gekennzeichnet, dass** der Dichtkörper (12) an seiner Außenumfangsseite zumindest einen Längskanal (14) ausbildet.

5. Durchflussregelventil (2) nach einem der voranstehenden Ansprüche, **dadurch gekennzeichnet, dass** der Dichtkörper (12) an seiner Außenumfangsseite eine Führungsfläche (16) und eine, vorzugsweise davon verschiedene, Befestigungsfläche (18) aufweist.

6. Durchflussregelventil (2) nach einem der voranstehenden Ansprüche, **dadurch gekennzeichnet, dass** der Dichtkörper (12) zwei Abschnitte unterschiedlichen Außendurchmessers aufweist, wobei die Führungsfläche (16) am Abschnitt mit kleinerem Außendurchmesser verortet ist und die Befestigungsfläche (18) am Abschnitt mit größerem Außendurchmesser verortet ist.

7. Durchflussregelventil (2) nach einem der voranstehenden Ansprüche, **dadurch gekennzeichnet, dass** der Dichtkörper (12) anströmseitig
- einen Staudruckreduzierungsabschnitt (22) aufweist und/oder
- einen konvex und/oder konkav und/oder linear geformten Kennlinieneinstellungsabschnitt (24) aufweist und/oder
- einen Dichtabschnitt (26) aufweist und/oder
- einen Abströmabschnitt (28) aufweist.

8. Durchflussregelventil (2) nach einem der voranstehenden Ansprüche, **dadurch gekennzeichnet, dass** der Dichtkörper (12) abströmseitig eine Düsennadel (78) aufweist.

9. Durchflussregelventil (2) nach einem der voranstehenden Ansprüche, **dadurch gekennzeichnet, dass** das Durchflussregelventil (2) einen Lagerring (30) umfasst, gegen den sich ein Vorspannmittel (32) abstützt.

10. Durchflussregelventil (2) nach einem der voranstehenden Ansprüche, **dadurch gekennzeichnet, dass** der Elektromagnet (100) eine Ankerstange (34) umfasst, die als Hohlteil ausgebildet ist und/oder eine Wandstärke im Bereich von 0,2 mm bis 0,4 mm aufweist.

11. Durchflussregelventil (2) nach Anspruch 10, **dadurch gekennzeichnet, dass** der Anker (36) des Elektromagneten (100) innenumfangsseitig eine Fixiernut (38) ausbildet, in welche die Ankerstange (34) eingreift, vorzugsweise greift ein axialer Rand der Ankerstange (34) unter Ausbildung eines sich verjüngenden Innendurchmessers in die Fixiernut (38) ein.

12. Verfahren zur Montage einer Ankerstange (34), umfassend die folgenden Schritte:
- Bereitstellen eines Ankers (36) mit einem Längsdurchgang (40) und einer innenumfangsseitigen Fixiernut (38),
- Bereitstellen einer Ankerstange (34), die als Hohlteil ausgebildet ist,
- Einführen der Ankerstange (34) in den Längsdurchgang (40) von einer ersten Seite des Ankers (36),
- Einführen eines Verformungswerkzeugs in den Längsdurchgang (40) von einer zweiten Seite des Ankers (36),
- Einformen der Ankerstange (34) in die Fixiernut (38) mittels des Verformungswerkzeugs.
